(19) 

Europäisches
Patentamt
European
Patent Office
Office européen
des brevets

(11) **EP 3 188 527 A1**

(12) **EUROPEAN PATENT APPLICATION**
published in accordance with Art. 153(4) EPC

(43) Date of publication:
**05.07.2017 Bulletin 2017/27**

(51) Int Cl.:
***H04W 16/18*** (2009.01)

(21) Application number: **14898423.0**

(22) Date of filing: **31.07.2014**

(86) International application number:
**PCT/CN2014/083475**

(87) International publication number:
**WO 2016/015304 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventors:
• **YI, Youwen
Shenzhen
Guangdong 518129 (CN)**

• **ZHUANG, Hongcheng
Shenzhen
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(54) **METHOD AND DEVICE FOR DEPLOYING ACCESS POINT**

(57)     The present invention discloses an access point deployment method and apparatus, so as to jointly optimize performance of a backhaul network and an access network, and effectively expand a network capacity. The apparatus includes: a determining module, configured to: determine at least one candidate position, and determine different combinations that include a specified quantity of candidate positions; a processing module, configured to: determine, according to at least one combination determined by the determining module, a total available capacity of a backhaul network and a total capacity of an access network if a new access point is deployed at each candidate position included in each combination of the at least one combination, and determine, according to the total available capacity of the backhaul network and the total capacity of the access network, a network joint utility value corresponding to each combination of the at least one combination; and a selection module, configured to: determine a maximum value of the network joint utility values that are obtained by the processing module and are corresponding to the combinations of the at least one combination, and determine, as a position for deploying a new access point, a candidate position included in a combination corresponding to the maximum value.

FIG. 2

## Description

## TECHNICAL FIELD

The present invention relates to the field of communications technologies, and in particular, to an access point deployment method and apparatus.

## BACKGROUND

To meet an increasing demand of a user for a communications network service, a network capacity needs to be continuously expanded. Currently, a most effective method for improving the network capacity is base station miniaturization. A base station miniaturization process in a cellular network is as follows: a macro base station, a micro base station, a pico base station, a femto base station, and the like. An effective way to expand a capacity of a deployed network is to add a miniaturized base station (a small cell for short). The newly added small cell can not only effectively improve a network capacity, but also cover a specific network blind area.

As a base station coverage area decreases and a base station deployment density increases, a network is more dynamic. To better meet a dynamic demand of the network, the new small cell uses a wireless backhaul technology. In a wireless backhaul manner, a construction environment limitation in a wired backhaul manner (such as an optical fiber) may be avoided, and flexible adjustment may further be performed, so that a network self-healing capability is strong.

However, a backhaul link capacity in the wireless backhaul manner is less than that in the wired backhaul manner such as an optical fiber. In addition, with development of a wireless access standard, an air interface rate is increasingly high, and the backhaul link capacity affects wireless access network performance.

In conclusion, impact of a backhaul link capacity on wireless access network performance is not considered regardless of the wired backhaul manner or the wireless backhaul manner that is used as a base station deployment manner.

## SUMMARY

Embodiments of the present invention provide an access point deployment method and apparatus, so as to jointly optimize performance of a backhaul network and an access network, and effectively expand a network capacity.

According to a first aspect, the present invention provides an access point deployment apparatus, including:

a determining module, configured to: determine at least one candidate position, and determine at least one combination that includes a specified quantity of candidate positions, where the specified quantity is at least one;

a processing module, configured to: determine, according to the at least one combination determined by the determining module, a total available capacity of a backhaul network and a total capacity of an access network if a new access point is deployed at each candidate position included in each combination of the at least one combination, and determine, according to the total available capacity of the backhaul network and the total capacity of the access network, a network joint utility value corresponding to each combination of the at least one combination; and

a selection module, configured to: determine a maximum value of the network joint utility values that are obtained by the processing module and are corresponding to the combinations of the at least one combination, and determine, as a position for deploying a new access point, a candidate position included in a combination corresponding to the maximum value.

With reference to the first aspect, in a first possible implementation manner, the determining module is specifically configured to:

determine, as the candidate position, a position at which a maximum backhaul link capacity of a deployed new access point is greater than a peak throughput of the new access point, and load of the new access point exceeds a specific threshold.

With reference to the first aspect, in a second possible implementation manner, the determining module is specifically configured to:

determine, as the candidate position, a position at which a maximum backhaul link capacity of a deployed new access point is greater than a peak throughput of the new access point, and a proportion of a blind area covered by the new access point to a coverage area of the new access point exceeds a preset threshold.

With reference to the first aspect, in a third possible implementation manner, the processing module is specifically configured to:

determine an optimal topology of the backhaul network after the new access point is deployed at each candidate position included in each combination of the at least one combination, and calculate a sum of available backhaul capacities of access points in the network after the new access point is deployed, to obtain the total available capacity of the backhaul network.

With reference to the first aspect, in a fourth possible implementation manner, the processing module is specifically configured to:

determine to-be-optimized access points in the network after the new access point is deployed at each candidate position included in each combination of the at least one combination; and
adjust a parameter of each of the to-be-optimized access points, to maximize an access network capacity of an optimized access point and meet a condition: the access network capacity of the optimized access point is not greater than an available backhaul capacity of the access point.

With reference to the fourth possible implementation manner of the first aspect, in a fifth possible implementation manner, the processing module is specifically configured to:

determine the new access point deployed at each candidate position included in each combination of the at least one combination and a neighboring access point of the new access point, determine an access point that is deployed in the network and whose available-backhaul capacity variation exceeds a specified threshold after the new access point is deployed and a neighboring access point of the access point, and use the determined access points as the to-be-optimized access points.

With reference to the fourth possible implementation manner of the first aspect, in a sixth possible implementation manner, the processing module is further configured to:

before adjusting the parameter of each of the to-be-optimized access points, group the to-be-optimized access points, and group access points adjacent to each other into a same group; and
the processing module is specifically configured to:

adjust a parameter of each to-be-optimized access point included in each group.

With reference to any one of the first aspect to the sixth possible implementation manner, in a seventh possible implementation manner, the processing module is specifically configured to:

calculate a sum of a product of the total available capacity of the backhaul network and a first weighting coefficient and a product of the total capacity of the access network and a second weighting coefficient, to obtain the network joint utility value corresponding to the combination, where a sum of the first weighting coefficient and the second weighting coefficient is 1.

According to a second aspect, the present invention provides an access point deployment method, including:

determining at least one candidate position, and determining at least one combination that includes a specified quantity of candidate positions, where the specified quantity is at least one;
determining, according to the determined at least one combination, a total available capacity of a backhaul network and a total capacity of an access network if a new access point is deployed at each candidate position included in each combination of the at least one combination, and determining, according to the total available capacity of the backhaul network and the total capacity of the access network, a network joint utility value corresponding to each combination of the at least one combination; and
determining a maximum value of the obtained network joint utility values corresponding to the combinations of the at least one combination, and determining, as a position for deploying a new access point, a candidate position included in a combination corresponding to the maximum value.

With reference to the second aspect, in a first possible implementation manner, the determining at least one candidate position includes:

determining, the candidate position, a position at which a maximum backhaul link capacity of a deployed new access point is greater than a peak throughput of the new access point, and load of the new access point exceeds a specific threshold.

With reference to the second aspect, in a second possible implementation manner, the determining at least one candidate position includes:

determining, as the candidate position, a position at which a maximum backhaul link capacity of a deployed new access point is greater than a peak throughput of the new access point, and a proportion of a blind area covered by the new access point to a coverage area of the new access point exceeds a preset threshold.

With reference to the second aspect, in a third possible implementation manner, the determining a total available capacity of a backhaul network if a new access point is deployed at each candidate position included in each combination of the at least one combination includes:

determining an optimal topology of the backhaul network after the new access point is deployed at each candidate position included in each combination of the at least one combination, and calculating a sum of available backhaul capacities of access points in the network after the new access point is deployed, to obtain the total available capacity of the backhaul network.

With reference to the second aspect, in a fourth possible implementation manner, the determining a total capacity of an access network if a new access point is deployed at each candidate position included in each combination of the at least one combination includes:

determining to-be-optimized access points in the network after the new access point is deployed at each candidate position included in each combination of the at least one combination; and adjusting a parameter of each of the to-be-optimized access points, to maximize an access network capacity of an optimized access point and meet a condition: the access network capacity of the optimized access point is not greater than an available backhaul capacity of the access point.

With reference to the fourth possible implementation manner of the second aspect, in a fifth possible implementation manner, the determining to-be-optimized access points in the network after the new access point is deployed at each candidate position included in each combination of the at least one combination includes:

determining the new access point deployed at each candidate position included in each combination of the at least one combination and a neighboring access point of the new access point, determining an access point that is deployed in the network and whose available-backhaul capacity variation exceeds a specified threshold after the new access point is deployed and a neighboring access point of the access point, and using the determined access points as the to-be-optimized access points.

With reference to the fourth possible implementation manner of the second aspect, in a sixth possible implementation manner, before the adjusting a parameter of each of the to-be-optimized access points, the method further includes:

grouping the to-be-optimized access points, and grouping access points adjacent to each other into a same group; and the adjusting a parameter of each of the to-be-optimized access points includes:

adjusting a parameter of each to-be-optimized access point included in each group.

With reference to any one of the second aspect to the sixth possible implementation manner, in a seventh possible implementation manner, the determining, according to the total available capacity of the backhaul network and the total capacity of the access network, a network joint utility value corresponding to each combination of the at least one combination includes:

calculating a sum of a product of the total available capacity of the backhaul network and a first weighting coefficient and a product of the total capacity of the access network and a second weighting coefficient, to obtain the network joint utility value corresponding to the combination, where a sum of the first weighting coefficient and the second weighting coefficient is 1.

Based on the foregoing technical solutions, in the embodiments of the present invention, a total available capacity of a backhaul network and a total capacity of an access network are calculated if a new access point is deployed according to each combination of a candidate position; a network joint utility value corresponding to each combination is calculated according to the total available capacity of the backhaul network and the total capacity of the access network; and a maximum value of the obtained network joint utility values corresponding to the combinations is selected, and a candidate position included in a combination corresponding to the maximum value is determined as an optimal position for deploying a new access point. Therefore, performance of the backhaul network and the access network can be jointly optimized, and utility of a deployed new access point is maximized, to effectively expand a network capacity and reduce network congestion due to improper deployment.

BRIEF DESCRIPTION OF DRAWINGS

FIG. 1 is a schematic diagram of an application scenario instance according to an embodiment of the present invention;
FIG. 2 is a schematic structural diagram of an access point deployment apparatus according to an embodiment of the present invention;
FIG. 3 is a schematic structural diagram of an access point deployment device according to an embodiment of the present invention; and
FIG. 4 is a schematic flowchart of an access point deployment method according to an embodiment of the present invention.

DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the following embodiments, an access point may be a base station in a cellular mobile communications network, and the base station may be at least one of a macro base station, a micro base station, a pico base station, or a femto base station; or an access point may be an access point in a wireless local area network (WLAN) network.

It is assumed the access point is a base station in the cellular mobile communications network. It should be noted that, a new-base station deployment method provided in the embodiments of the present invention is not limited to a cellular mobile communications network in which a wireless backhaul manner is used, and is also applicable to a cellular mobile communications network in which a wired backhaul manner is used. That is, a backhaul manner used in the cellular mobile communications network is not limited in the present invention.

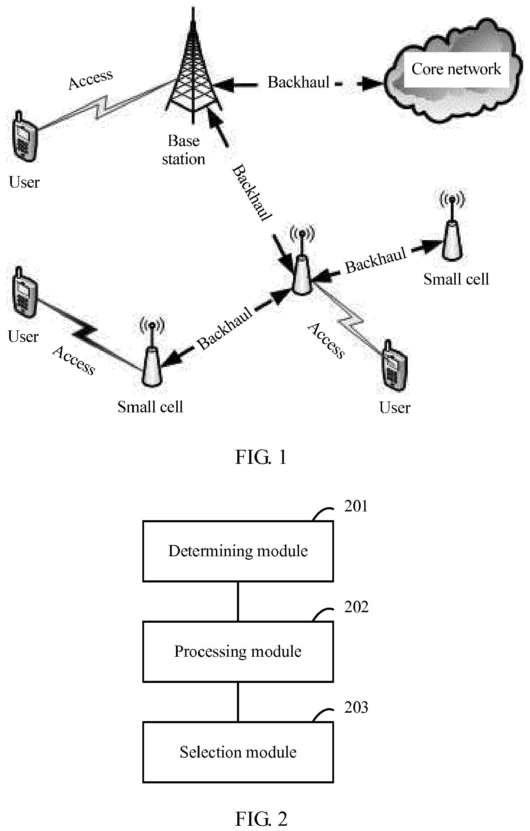

A typical application scenario of an access point deployment apparatus and method that are provided in the following embodiments of the present invention is shown in FIG. 1. A mesh network is used for backhaul links of some base stations in the wireless network, and a new miniaturized base station needs to be deployed in the network for capacity expansion. In the application scenario, a user establishes communication with a base station by using a wireless access link, to access the network, and each base station is connected to a core network by using a backhaul network. A wired backhaul manner or a wireless backhaul manner is used in the backhaul network.

In a first embodiment of the present invention, an access point deployment apparatus is provided. As shown in FIG. 2, the apparatus mainly includes:

a determining module 201, configured to: determine at least one candidate position, and determine at least one combination that includes a specified quantity of candidate positions, where the specified quantity is at least one;

a processing module 202, configured to: determine, according to the at least one combination determined by the determining module 201, a total available capacity of a backhaul network and a total capacity of an access network if a new access point is deployed at each candidate position included in each combination of the at least one combination, and determine, according to the total available capacity of the backhaul network and the total capacity of the access network, a network joint utility value corresponding to each combination of the at least one combination; and

a selection module 203, configured to: determine a maximum value of the network joint utility values that are obtained by the processing module 202 and are corresponding to the combinations of the at least one combination, and determine, as a position for deploying a new access point, a candidate position included in a combination corresponding to the maximum value.

In a preferred implementation manner, the determining module 201 is specifically configured to:

determine, as the candidate position, a position at which a maximum backhaul link capacity of a deployed new access point is greater than a peak throughput of the new access point, and load of the new access point exceeds a specific threshold.

In another preferred implementation manner, the determining module 201 is specifically configured to:

determine, as the candidate position, a position at which a maximum backhaul link capacity of a deployed new access point is greater than a peak throughput of the new access point, and a proportion of a blind area covered by the new access point to a coverage area of the new access point exceeds a preset threshold.

In specific implementation, a physical position that can supply power to a deployed new access point and can accommodate the deployed new access point is determined as a physical position at which an access point can be deployed.

Specifically, it is assumed that a new access point deployed at a determined physical position is a capacity-enhanced base station. The physical position is determined as the candidate position if the new access point meets the following two conditions:

1. Load of the new access point exceeds a specific threshold.
2. A maximum backhaul link capacity of the new access point is greater than a peak throughput of the new access point.

Specifically, it is assumed that a new access point deployed at a determined physical position is a coverage-enhanced base station. The physical position is determined as the candidate position if the new access point meets the following two conditions:

1. A proportion of a blind area covered by the deployed new access point to a coverage area of the new access point exceeds a preset threshold.
2. A maximum backhaul link capacity of the new access point is greater than a peak throughput of the new access point.

Preferably, the processing module 202 is specifically configured to:

> determine an optimal topology of the backhaul network after the new access point is deployed at each candidate position included in each combination of the at least one combination, and calculate a sum of available backhaul capacities of access points in the network after the new access point is deployed, to obtain the total available capacity of the backhaul network.

In specific implementation, the optimal topology of the backhaul network after the new access point is deployed may be determined by using a distributed or centralized search algorithm, and when a connection relationship between the new access point and a neighboring access point enables the total available capacity of the backhaul network to be maximum, the connection relationship is determined as the optimal topology of the backhaul network after the new access point is deployed. In this embodiment of the present invention, a manner of determining the optimal topology of the backhaul network after the new access point is deployed is not limited, and any existing method that can be used to determine a topology of a backhaul network of an access point can be applied to the present invention.

The available backhaul capacity of each access point is equal to a difference between a maximum backhaul capacity of the access point and a backhaul forwarding capacity of the access point. In an example of uplink transmission, a maximum backhaul capacity of an access point is a sum of uplink link capacities of the access point, and a backhaul forwarding capacity of the access point is a sum of forwarding capacities from other access points.

Preferably, the processing module 202 is specifically configured to:

> determine to-be-optimized access points in the network after the new access point is deployed at each candidate position included in each combination of the at least one combination; and
> adjust a parameter of each of the to-be-optimized access points, to maximize an access network capacity of an optimized access point and meet a condition: the access network capacity of the optimized access point is not greater than an available backhaul capacity of the access point.

In specific implementation, a downtilt, pilot power, or the like of each to-be-optimized access point may be adjusted, to maximize the access network capacity of the access point.

In specific implementation, a random optimization algorithm such as a genetic algorithm, a simulated annealing algorithm, or an ant colony algorithm may be used to optimize the parameter of each to-be-optimized access point, to maximize a counted link capacity of the access point.

In the preferred implementation manner, the processing module 202 is specifically configured to:

> determine the new access point deployed at each candidate position included in each combination of the at least one combination and a neighboring access point of the new access point, determine an access point that is deployed in the network and whose available-backhaul capacity variation exceeds a specified threshold after the new access point is deployed and a neighboring access point of the access point, and use the determined access points as the to-be-optimized access points.

In the preferred implementation manner, the processing module 202 is further configured to:

> before adjusting the parameter of each of the to-be-optimized access points, group the to-be-optimized access points, and group access points adjacent to each other into a same group.

The processing module 202 is specifically configured to:

> adjust a parameter of each to-be-optimized access point included in each group.

In specific implementation, a complete process in which the processing module determines the to-be-optimized access points and performs optimization is as follows:

> determine, as a to-be-optimized access point, a new access point deployed in each candidate position included in one combination, and add the to-be-optimized access point to a to-be-optimized set; determine, as a to-be-optimized access point, an access point that is deployed in the network and whose available-backhaul capacity increment rate exceeds a first threshold after the new access point is deployed, and add the to-be-optimized access point to the to-be-optimized set; determine, as a to-be-optimized access point, an access point that is deployed in the network and whose available-backhaul capacity decrement rate exceeds a second threshold after the new access point is deployed, and add the to-be-optimized access point to the to-be-optimized set; and determine, as a to-be-optimized access point, a neighboring access point of each to-be-optimized access point included in the to-be-optimized set, and add the to-be-optimized access point to the to-be-optimized set; and
> group the to-be-optimized access points in the to-be-optimized set, and group access points adjacent to each other into one group.

For example, a specific process of grouping the to-be-optimized access points in the to-be-optimized set may be described as follows:

First, randomly select a to-be-optimized access point from the to-be-optimized set as one group; select one to-be-optimized access point each time from remaining to-be-optimized access points in the to-be-optimized set, to compare the to-be-optimized access point with each access point in an existing group; and if the to-be-optimized access point is adjacent to a particular access point in only one existing group, add the to-be-optimized access point to the group; or if the to-be-optimized access point is adjacent to access points in at least two existing groups, add the to-be-optimized access point to a group obtained after combining the groups in which the to-be-optimized access point has neighboring access points into one group; or if there is no access point that is in the existing group and is adjacent to the to-be-optimized access point, add the to-be-optimized access point to a new group. The process is repeated until each to-be-optimized access point in the to-be-optimized set is traversed, to group all the to-be-optimized access points.

Preferably, the processing module 202 is specifically configured to:

calculate a sum of a product of the total available capacity of the backhaul network and a first weighting coefficient and a product of the total capacity of the access network and a second weighting coefficient, to obtain the network joint utility value corresponding to the combination, where a sum of the first weighting coefficient and the second weighting coefficient is 1.

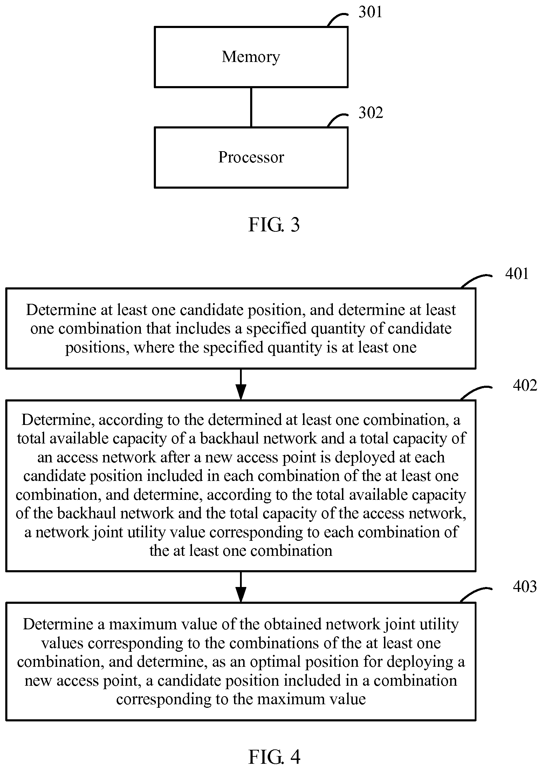

Based on a same invention concept, in a second embodiment of the present invention, an access point deployment device is provided. As shown in FIG. 3, the device includes a memory 301 and a processor 302. The memory 301 stores a computer program executed according to a specified procedure. The processor 302 is configured to execute the computer program stored in the memory 301.

The processor 302 is configured to: determine at least one candidate position, and determine at least one combination that includes a specified quantity of candidate positions, where the specified quantity is at least one; determine, according to the determined at least one combination, a total available capacity of a backhaul network and a total capacity of an access network if a new access point is deployed at each candidate position included in each combination of the at least one combination, and determine, according to the total available capacity of the backhaul network and the total capacity of the access network, a network joint utility value corresponding to each combination of the at least one combination; and determine a maximum value of the obtained network joint utility values corresponding to the combinations of the at least one combination, and determine, as a position for deploying a new access point, a candidate position included in a combination corresponding to the maximum value.

Preferably, the processor 302 is specifically configured to:

determine, as the candidate position, a position at which a maximum backhaul link capacity of a deployed new access point is greater than a peak throughput of the new access point, and load of the new access point exceeds a specific threshold; or determine, as the candidate position, a position at which a maximum backhaul link capacity of a deployed new access point is greater than a peak throughput of the new access point, and a proportion of a blind area covered by the new access point to a coverage area of the new access point exceeds a preset threshold.

Preferably, the processor 302 is specifically configured to:

determine an optimal topology of the backhaul network after the new access point is deployed at each candidate position included in each combination of the at least one combination, and calculate a sum of available backhaul capacities of access points in the network after the new access point is deployed, to obtain the total available capacity of the backhaul network.

The available backhaul capacity of each access point is equal to a difference between a maximum backhaul capacity of the access point and a backhaul forwarding capacity of the access point. In an example of uplink transmission, a maximum backhaul capacity of an access point is a sum of uplink link capacities of the access point, and a backhaul forwarding capacity of the access point is a sum of forwarding capacities from other access points.

Preferably, the processor 302 is specifically configured to:

determine to-be-optimized access points in the network after the new access point is deployed at each candidate position included in each combination of the at least one combination; and adjust a parameter of each of the to-be-optimized access points, to maximize an access network capacity of an optimized access point and meet a condition: the access network capacity of the optimized access point is not greater than an available backhaul capacity of the access point.

In the preferred implementation manner, the processor 302 is specifically configured to:

determine the new access point deployed at each candidate position included in each combination of the at least one combination and a neighboring access point of the new access point, determine an access point that is deployed in the network and whose available-backhaul capacity variation exceeds a specified threshold after the new access point is deployed and a neighboring access point of the access point, and use the determined access points as the to-be-optimized access points.

In the preferred implementation manner, the processor 302 is specifically configured to:

before adjusting the parameter of each of the to-be-optimized access points, group the to-be-optimized access points, and group access points adjacent to each other into a same group; and adjust a parameter of each to-be-optimized access point included in each group.

Preferably, the processor 302 is specifically configured to:

calculate a sum of a product of the total available capacity of the backhaul network and a first weighting coefficient and a product of the total capacity of the access network and a second weighting coefficient, to obtain the network joint utility value corresponding to the combination, where a sum of the first weighting coefficient and the second weighting coefficient is 1.

Based on a same invention concept, in a third embodiment of the present invention, an access point deployment method is provided. For specific implementation of the method, reference may be made to descriptions in the foregoing first and the second embodiments, and no repeated description is provided. As shown in FIG. 4, a detailed procedure of the access point deployment method is as follows.

Step 401: Determine at least one candidate position, and determine at least one combination that includes a specified quantity of candidate positions, where the specified quantity is at least one.

In a preferred implementation manner, a specific process of determining the at least one candidate position is as follows:

determine, as the candidate position, a position at which a maximum backhaul link capacity of a deployed new access point is greater than a peak throughput of the new access point, and load of the new access point exceeds a specific threshold.

In another preferred implementation manner, a specific process of determining the at least one candidate position is as follows:

determine, as the candidate position, a position at which a maximum backhaul link capacity of a deployed new access point is greater than a peak throughput of the new access point, and a proportion of a blind area covered by the new access point to a coverage area of the new access point exceeds a preset threshold.

In specific implementation, a physical position that can supply power to a deployed new access point and can accommodate the deployed new access point is determined as a physical position at which an access point can be deployed.

Specifically, it is assumed that a new access point deployed at a determined physical position is a capacity-enhanced base station. The physical position is determined as the candidate position if the new access point meets the following two conditions:

1. Load of the new access point exceeds a specific threshold.
2. A maximum backhaul link capacity of the new access point is greater than a peak throughput of the new access point.

Specifically, it is assumed that a new access point deployed at a determined physical position is a coverage-enhanced base station. The physical position is determined as the candidate position if the new access point meets the following two conditions:

1. A proportion of a blind area covered by the deployed new access point to a coverage area of the new access point exceeds a preset threshold.
2. A maximum backhaul link capacity of the new access point is greater than a peak throughput of the new access point.

Step 402: Determine, according to the determined at least one combination, a total available capacity of a backhaul network and a total capacity of an access network if a new access point is deployed at each candidate position included in each combination of the at least one combination, and determine, according to the total available capacity of the backhaul network and the total capacity of the access network, a network joint utility value corresponding to each combination of the at least one combination.

Preferably, a specific process of determining the total available capacity of the backhaul network after the new access point is deployed at each candidate position included in each combination of the at least one combination is as follows:

determine an optimal topology of the backhaul network after the new access point is deployed at each candidate position included in each combination of the at least one combination, and calculate a sum of available backhaul capacities of access points in the network after the new access point is deployed, to obtain the total available capacity of the backhaul network.

In specific implementation, the optimal topology of the backhaul network after the new access point is deployed may be determined by using a distributed or centralized search algorithm, and when a connection relationship between the new access point and a neighboring access point enables the total available capacity of the backhaul network to be maximum, the connection relationship is determined as the optimal topology of the backhaul network after the new access point is deployed. In this embodiment of the present invention, a manner of determining the optimal topology of the backhaul network after the new access point is deployed is not limited, and any existing method that can be used to determine a topology of a backhaul network of an access point can be applied to the present invention.

The available backhaul capacity of each access point is equal to a difference between a maximum backhaul capacity of the access point and a backhaul forwarding capacity of the access point. In an example of uplink transmission, a maximum backhaul capacity of an access point is a sum of uplink link capacities of the access point, and a backhaul forwarding capacity of the access point is a sum of forwarding capacities from other access points.

Preferably, a specific process of determining the total capacity of the access network after the new access point is deployed at each candidate position included in each combination of the at least one combination is as follows:

determine to-be-optimized access points in the network after the new access point is deployed at each candidate position included in each combination of the at least one combination; and

adjust a parameter of each of the to-be-optimized access points, to maximize an access network capacity of an optimized access point and meet a condition: the access network capacity of the optimized access point is not greater than an available backhaul capacity of the access point.

In specific implementation, a downtilt, pilot power, or the like of each to-be-optimized access point may be adjusted, to maximize the access network capacity of the access point.

In specific implementation, a random optimization algorithm such as a genetic algorithm, a simulated annealing algorithm, or an ant colony algorithm may be used to optimize the parameter of each to-be-optimized access point, to maximize a counted link capacity of the access point.

In the preferred implementation manner, a specific process of determining the to-be-optimized access points in the network after the new access point is deployed at each candidate position included in each combination of the at least one combination is as follows:

determine the new access point deployed at each candidate position included in each combination of the at least one combination and a neighboring access point of the new access point, determine an access point that is deployed in the network and whose available-backhaul capacity variation exceeds a specified threshold after the new access point is deployed and a neighboring access point of the access point, and use the determined access points as the to-be-optimized access points.

Preferably, before the parameter of each of the to-be-optimized access points is adjusted, the to-be-optimized access points are grouped, and access points adjacent to each other are grouped into a same group; and a parameter of each to-be-optimized access point included in each group is adjusted, to maximize the access network capacity of the optimized access point and meet the condition that: the access network capacity of the optimized access point is not greater than the available backhaul capacity of the access point.

In specific implementation, a complete process in which the processing module determines the to-be-optimized access points and performs optimization is as follows:

determine, as a to-be-optimized access point, a new access point deployed in each candidate position included in one combination, and add the to-be-optimized access point to a to-be-optimized set; determine, as a to-be-optimized access point, an access point that is deployed in the network and whose available-backhaul capacity increment rate exceeds a first threshold after the new access point is deployed, and add the to-be-optimized access point to the to-be-optimized set; determine, as a to-be-optimized access point, an access point that is deployed in the network and whose available-backhaul capacity decrement rate exceeds a second threshold after the new access point is deployed, and add the to-be-optimized access point to the to-be-optimized set; and determine, as a to-be-optimized access point, a neighboring access point of each to-be-optimized access point included in the to-be-optimized set, and add the to-be-optimized access point to the to-be-optimized set; and

group the to-be-optimized access points in the to-be-optimized set, and group access points adjacent to each other into one group.

In this embodiment of the present invention, the to-be-optimized access points are grouped, and access network optimization is performed for each group, to reduce calculation complexity when the network includes a large quantity of access points.

For example, a specific process of grouping the to-be-optimized access points in the to-be-optimized set may be described as follows:

First, randomly select a to-be-optimized access point from the to-be-optimized set as one group; select one to-be-optimized access point each time from remaining to-be-optimized access points in the to-be-optimized set, to compare the to-be-optimized access point with each access point in an existing group; and if the to-be-optimized access point is adjacent to a particular access point in only one existing group, add the to-be-optimized access point to the group; or if the to-be-optimized access point is adjacent to access points in at least two existing groups, add the to-be-optimized access point to a group obtained after combining the groups in which the to-be-optimized access point has neighboring access points into one group; or if there is no access point that is in the existing group and is adjacent to the to-be-optimized access point, add the to-be-optimized access point to a new group. The process is repeated until each to-be-optimized access point in the to-be-optimized set is traversed, to group all the to-be-optimized access points.

Preferably, the determining, according to the total available capacity of the backhaul network and the total capacity of the access network, a network joint utility value corresponding to each combination of the at least one combination is specifically:

> calculating a sum of a product of the total available capacity of the backhaul network and a first weighting coefficient and a product of the total capacity of the access network and a second weighting coefficient, to obtain the network joint utility value corresponding to the combination, where a sum of the first weighting coefficient and the second weighting coefficient is 1.

Step 403: Determine a maximum value of the obtained network joint utility values corresponding to the combinations of the at least one combination, and determine, as an optimal position for deploying a new access point, a candidate position included in a combination corresponding to the maximum value.

Specifically, a joint utility function used to calculate a network joint utility value corresponding to one combination may be represented as:

$$\max\left( \alpha\sum_i Cap_i^{bck} + (1-\alpha)\sum_j Cap_j^{acc} \right),$$

where

$1 \le i, j \le N$, $N$ represents a total quantity of access points included in a network if a new access point is deployed, $Cap_i^{bck}$ represents an available backhaul capacity of an access point $i$, and $Cap_j^{acc}$ represents an access network capacity of an access point $j$.

In the foregoing embodiments, if a quantity of new access points is not specified, an optimal position for deploying a new access point is selected from all possible combinations of candidate positions; if a quantity of new access points is specified, an optimal position for deploying a new access point is selected from a combination that includes the specified quantity of candidate positions.

Based on the foregoing technical solutions, in this embodiment of the present invention, a total available capacity of a backhaul network and a total capacity of an access network are calculated if a new access point is deployed according to each combination of a candidate position; a network joint utility value corresponding to each combination is calculated according to the total available capacity of the backhaul network and the total capacity of the access network; and a maximum value of the obtained network joint utility values corresponding to the combinations is selected, and a candidate position included in a combination corresponding to the maximum value is determined as an optimal position for deploying a new access point. Therefore, performance of the backhaul network and the access network can be jointly optimized, and utility of a deployed new access point is maximized, to effectively expand a network capacity and reduce network congestion due to improper deployment.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. An access point deployment apparatus, comprising:

   a determining module, configured to: determine at least one candidate position, and determine at least one combination that comprises a specified quantity of candidate positions, wherein the specified quantity is at least one;
   a processing module, configured to: determine, according to the at least one combination determined by the determining module, a total available capacity of a backhaul network and a total capacity of an access network if a new access point is deployed at each candidate position comprised in each combination of the at least one combination, and determine, according to the total available capacity of the backhaul network and the total capacity of the access network, a network joint utility value corresponding to each combination of the at least one combination; and
   a selection module, configured to: determine a maximum value of the network joint utility values that are obtained by the processing module and are corresponding to the combinations of the at least one combination, and determine, as a position for deploying a new access point, a candidate position comprised in a combination corresponding to the maximum value.

2. The apparatus according to claim 1, wherein the determining module is specifically configured to:

   determine, as the candidate position, a position at which a maximum backhaul link capacity of a deployed new access point is greater than a peak throughput of the new access point, and load of the new access point exceeds a specific threshold.

3. The apparatus according to claim 1, wherein the determining module is specifically configured to:

   determine, as the candidate position, a position at which a maximum backhaul link capacity of a deployed new access point is greater than a peak throughput of the new access point, and a proportion of a blind area covered by the new access point to a coverage area of the new access point exceeds a preset threshold.

4. The apparatus according to claim 1, wherein the processing module is specifically configured to:

   determine an optimal topology of the backhaul network after the new access point is deployed at each candidate position comprised in each combination of the at least one combination, and calculate a sum of available backhaul capacities of access points in the network after the new access point is deployed, to obtain the total available capacity of the backhaul network.

5. The apparatus according to claim 1, wherein the processing module is specifically configured to:

   determine to-be-optimized access points in the network after the new access point is deployed at each candidate position comprised in each combination of the at least one combination; and adjust a parameter of each of the to-be-optimized access points, to maximize an access network capacity of an optimized access point and meet a condition: the access network capacity of the optimized access point is not greater than an available backhaul capacity of the access point.

6. The apparatus according to claim 5, wherein the processing module is specifically configured to:

   determine the new access point deployed at each candidate position comprised in each combination of the at least one combination and a neighboring access point of the new access point, determine an access point that is deployed in the network and whose available-backhaul capacity variation exceeds a specified threshold after the new access point is deployed and a neighboring access point of the access point, and use the determined access points as the to-be-optimized access points.

7. The apparatus according to claim 5, wherein the processing module is further configured to:

before adjusting the parameter of each of the to-be-optimized access points, group the to-be-optimized access points, and group access points adjacent to each other into a same group; and
the processing module is specifically configured to:

adjust a parameter of each to-be-optimized access point comprised in each group.

8. The apparatus according to any one of claims 1 to 7, wherein the processing module is specifically configured to:

calculate a sum of a product of the total available capacity of the backhaul network and a first weighting coefficient and a product of the total capacity of the access network and a second weighting coefficient, to obtain the network joint utility value corresponding to the combination, wherein a sum of the first weighting coefficient and the second weighting coefficient is 1.

9. An access point deployment method, comprising:

determining at least one candidate position, and determining at least one combination that comprises a specified quantity of candidate positions, wherein the specified quantity is at least one;
determining, according to the determined at least one combination, a total available capacity of a backhaul network and a total capacity of an access network if a new access point is deployed at each candidate position comprised in each combination of the at least one combination, and determining, according to the total available capacity of the backhaul network and the total capacity of the access network, a network joint utility value corresponding to each combination of the at least one combination; and determining a maximum value of the obtained network joint utility values corresponding to the combinations of the at least one combination, and determining, as a position for deploying a new access point, a candidate position comprised in a combination corresponding to the maximum value.

10. The method according to claim 9, wherein the determining at least one candidate position comprises:

determining, as the candidate position, a position at which a maximum backhaul link capacity of a deployed new access point is greater than a peak throughput of the new access point, and load of the new access point exceeds a specific threshold.

11. The method according to claim 9, wherein the determining at least one candidate position comprises:

determining, as the candidate position, a position at which a maximum backhaul link capacity of a deployed new access point is greater than a peak throughput of the new access point, and a proportion of a blind area covered by the new access point to a coverage area of the new access point exceeds a preset threshold.

12. The method according to claim 9, wherein the determining a total available capacity of a backhaul network if a new access point is deployed at each candidate position comprised in each combination of the at least one combination comprises:

determining an optimal topology of the backhaul network after the new access point is deployed at each candidate position comprised in each combination of the at least one combination, and calculating a sum of available backhaul capacities of access points in the network after the new access point is deployed, to obtain the total available capacity of the backhaul network.

13. The method according to claim 9, wherein the determining a total capacity of an access network if a new access point is deployed at each candidate position comprised in each combination of the at least one combination comprises:

determining to-be-optimized access points in the network after the new access point is deployed at each candidate position comprised in each combination of the at least one combination; and
adjusting a parameter of each of the to-be-optimized access points, to maximize an access network capacity of an optimized access point and meet a condition: the access network capacity of the optimized access point is not greater than an available backhaul capacity of the access point.

**14.** The method according to claim 13, wherein the determining to-be-optimized access points in the network after the new access point is deployed at each candidate position comprised in each combination of the at least one combination comprises:

determining the new access point deployed at each candidate position comprised in each combination of the at least one combination and a neighboring access point of the new access point, determining an access point that is deployed in the network and whose available-backhaul capacity variation exceeds a specified threshold after the new access point is deployed and a neighboring access point of the access point, and using the determined access points as the to-be-optimized access points.

**15.** The method according to claim 13, wherein before the adjusting a parameter of each of the to-be-optimized access points, the method further comprises:

grouping the to-be-optimized access points, and grouping access points adjacent to each other into a same group; and
the adjusting a parameter of each of the to-be-optimized access points comprises:

adjusting a parameter of each to-be-optimized access point comprised in each group.

**16.** The method according to any one of claims 9 to 15, wherein the determining, according to the total available capacity of the backhaul network and the total capacity of the access network, a network joint utility value corresponding to each combination of the at least one combination comprises:

calculating a sum of a product of the total available capacity of the backhaul network and a first weighting coefficient and a product of the total capacity of the access network and a second weighting coefficient, to obtain the network joint utility value corresponding to the combination, wherein a sum of the first weighting coefficient and the second weighting coefficient is 1.

FIG. 1

FIG. 2

301

Memory

302

Processor

FIG. 3

401

Determine at least one candidate position, and determine at least one combination that includes a specified quantity of candidate positions, where the specified quantity is at least one

402

Determine, according to the determined at least one combination, a total available capacity of a backhaul network and a total capacity of an access network after a new access point is deployed at each candidate position included in each combination of the at least one combination, and determine, according to the total available capacity of the backhaul network and the total capacity of the access network, a network joint utility value corresponding to each combination of the at least one combination

403

Determine a maximum value of the obtained network joint utility values corresponding to the combinations of the at least one combination, and determine, as an optimal position for deploying a new access point, a candidate position included in a combination corresponding to the maximum value

FIG. 4

# EP 3 188 527 A1

## INTERNATIONAL SEARCH REPORT

| International application No. |
| --- |
| PCT/CN2014/083475 |

### A. CLASSIFICATION OF SUBJECT MATTER

H04W 16/18 (2009.01) i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNPAT, CNKI, WPI, EPODOC: site selection, huawei, yi youwen, zhuang hongcheng, access point, base station, node B, enode, backhaul, network, capacity, access network, position, area, deploy, dispose, place, backhaul network, backhaul capacity, access capacity, layout

### C. DOCUMENTS CONSIDERED TO BE RELEVANT

| Category* | Citation of document, with indication, where appropriate, of the relevant passages | Relevant to claim No. |
| --- | --- | --- |
| A | CN 103702337 A (BEIJING UNIVERSITY OF POSTS AND TELECOMMUNICATIONS) 2 April 2014 (02.04.2014) the whole document | 1-16 |
| A | CN 101137183 A (ZTE CORP.) 5 March 2008 (05.03.2008) the whole document | 1-16 |
| A | CN 102740307 A (FUJITSU LIMITED) 17 October 2012 (17.10.2012) the whole document | 1-16 |
| A | CN 1992967 A (BEIJING P & T CONSULTING & DESIGN INSTITUTE CO., LTD.) 04 July 2007 (04.07.2007) the whole document | 1-16 |
| A | US 2013/0225183 A1 (QUALCOMM INCORPORATED) 29 August 2013 (29.08.2013) the whole document | 1-16 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 05 March 2015 | 20 April 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>CAO, Xiaoning<br><br>Telephone No. (86-10) 62413294 |

Form PCT/ISA /210 (second sheet) (July 2009)

**INTERNATIONAL SEARCH REPORT**
Information on patent family members

| | International application No. |
|---|---|
| | PCT/CN2014/083475 |

| Patent Documents referred in the Report | Publication Date | Patent Family | Publication Date |
|---|---|---|---|
| CN 103702337 A | 02 April 2014 | None | |
| CN 101137183 A | 05 March 2008 | None | |
| CN 102740307 A | 17 October 2012 | EP 2506623 A2 | 03 October 2012 |
| | | US 2012/0252467 A1 | 04 October 2012 |
| | | JP 2012213159 A | 01 November 2012 |
| CN 1992967 A | 04 July 2007 | None | |
| US 2013/0225183 A1 | 29 August 2013 | WO 2013/126849 A1 | 29 August 2013 |
| | | CN 104137596 A | 05 November 2014 |
| | | KR 20140138196 A | 03 December 2014 |
| | | EP 2818000 A1 | 31 December 2014 |

Form PCT/ISA/210 (patent family annex) (July 2009)